# EUROPEAN PATENT SPECIFICATION

(11) **EP 0 530 762 B1**
(45) Date of publication and mention of the grant of the patent: **13.05.1998**
(21) Application number: 92114970.4
(22) Date of filing: 02.09.1992
(51) Int. Cl.: H04N 9/30, G09G 3/34

(54) **DMD display system controller**
Steuersystem für eine DMD-Anzeige
Système de commande d'affichage à miroir déformable

(30) Priority: 06.09.1991 US 756007
(43) Date of publication of application: 10.03.1993
(73) Proprietor: TEXAS INSTRUMENTS INCORPORATED, Dallas Texas 75265 (US)
(72) Inventor: Hendrix, Henry D., Roswell, Georgia 30076 (US); Urbanus, Paul M., Dallas, Texas 75248 (US); Asahara, Masaho, Norcross, Gerogia 30092 (US)
(74) Representative: Schwepfinger, Karl-Heinz, Dipl.-Ing.

(56) References cited:
- EP-A- 0 195 203
- EP-A- 0 385 705
- WO-A-86/05305
- WO-A-92/09064
- JP-A-1180592 (H.FUKUOKA) 18 July 1989 & JP-A-1180592 (H.FUKUOKA) 18 July 1989 & US-A-5059963 (H.FUKUOKA) 22 October 1991

## Description

This invention relates to the field of display systems, more particularly to controllers for digital spatial light modulator displays of the type defined in the precharacterizing part of claim 5 and to a method as defined in the precharacterizing part of claim 1.

Standard televisions systems operate from an analog signal that drives a cathode ray tube (CRT) gun in a line-by-line rasterized fashion. Digital sampling of the analog signal allows for corrections in the signal that may be necessary because of faulty or poor quality transmission. Additionally, digital signal processing of the sampled signals can increase picture quality even in systems that do not require correction.

A unique problem arises when digital television uses an array of spatial light modulator devices. These spatial light modulators require a different data input series than the standard rasterized format. The digital samples must be manipulated to ensure the correct data gets to the proper row and column in the spatial light modulator array. A module that achieves such a function is shown in the related application, EP-A-0 530 759. Memory management schemes that allow this to work are shown in the related applications EP-A-0 530 760, and EP-A-0 530 761.

From EP-A-0 195 203 a display controller for either a CRT or a LCD system is known that displays the data in a rasterized format. In the case of the LCD, which has upper and lower screens, the data is processed onto each line of the device and then displayed before the next line of the device is addressed. An address generating circuit calculates at the beginning of each horizontal scanning two addresses of the memory corresponding respectively to the left most display positions on the current horizontal scanning lines on the upper and lower screens.

In US-A-5 059 963 a controller for a two-level display system is disclosed which comprises separate controller modules.

In EP-A-0 385 705 a digitized video system utilizing a spatial light modulator to form a two or three dimensional image is disclosed. A deformable mirror device is suggested as the spatial light modulator.

The overall concern is the coordination of the module that achieves the data manipulation, the memory management schemes, and the spatial light modulator array. Obviously, some kind of system controller is needed to provide the unique signals necessary to monitor and coordinate this system.

### SUMMARY OF THE INVENTION

Objects and advantages will be obvious, and will in part appear hereinafter and will be accomplished by the present invention which provides a system controller for a digital spatial light modulator display having the features of the characterizing part of claim 5. The controller contains as a minimum three subcontrollers. These subcontrollers regulate and coordinate operations between separate parts of the system: the spatial light modulator; the memory; and the data processing module. It is an advantage of the invention that it is adaptable, efficient and possesses a stream-lined functionality limiting the number of signals necessary for control.

### BRIEF DESCRIPTION OF THE DRAWINGS

For a complete understanding of the invention, and the advantages thereof, reference is now made to the following description in conjunction with the accompanying drawings, in which:

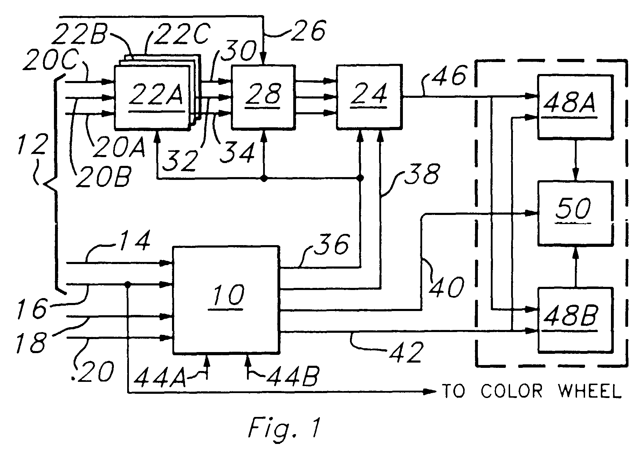

FIGURE 1 shows an overall system which contains a system controller.

FIGURE 2 shows a functional block diagram of a system controller.

FIGURE 3 shows a block diagram of a spatial light modulator controller.

FIGURE 4 shows a block diagram of a processing module controller.

FIGURE 5 shows a block diagram of a memory controller.

### DETAILED DESCRIPTION OF THE PREFERRED EMBODIMENT

One embodiment of the invention is shown as part of an overall spatial light modulator television system. The data is received from a video source on a set of input lines 12. The system controller directly receives lines 14 and 16 which are the horizontal and vertical synchronization signals from the video source. The vertical synchronization signal is also sent to the color wheel. Received from the color wheel is the color wheel lock signal 18, which relates its current status. Also provided to the controller is the power fail signal 20, which monitors the power status. These signals will be discussed in greater detail in further drawings. To allow flexibility for either front or rear projection, inputs 44A and 44B allow for a vertical or horizontal flip of the data, as determined by a switch selected by the user. The outputs to be produced from the system controller 10 are used to coordinate operation between the data manipulation processor 24, herein referred to as the data formatter, the spatial light modulator array 50, and the memory, shown here as two video RAMs, 48A and 48B, where 48A is video RAM for the upper half of the array of spatial light modulator, and video RAM 48B is for the lower half of the modulator array. One of these outputs is the sample clock which is sent to the analog-to-digital (A/D) converters 22A, 22B, and 22C. These A/D converters produce the digitized color data that enters the converters on the three lines 20A, 20B, and 20C. Data is passed from the three converters on lines 30, 32, and 34. In order to provide the proper data in the proper format, 640 samples, one sample per pixel, the sample clock is used. The size of the lines 30, 32, and 34 is only limited by the designer's imagination. In this embodiment, the data is produced in 10-bit samples, therefor the lines must be 10-bit data busses.

Many types of signal processing can be done to enhance these signals. One possible processing method is to perform gamma correction, which is done in module 28, This can be done, for example, by over sampling the data in 10-bit samples, then mapping the data into 8-bit samples. Regardless of what signal processing is done, this module also requires the input of the sample clock generated by the system controller for synchronization. When the data is finally passed to the data formatter module 24, the sample clock is used to coordinate the transfer between the two modules.

Additionally, the data formatter is provided with control signals on data bus, 38. The specific contents of the data bus are discussed in further detail in later drawings. Another set of output signals is provided to the spatial light modulator array 50 on bus 40. Additional outputs must be provided to the video RAMs 48A and 48B, in the memory module, on bus, 42.

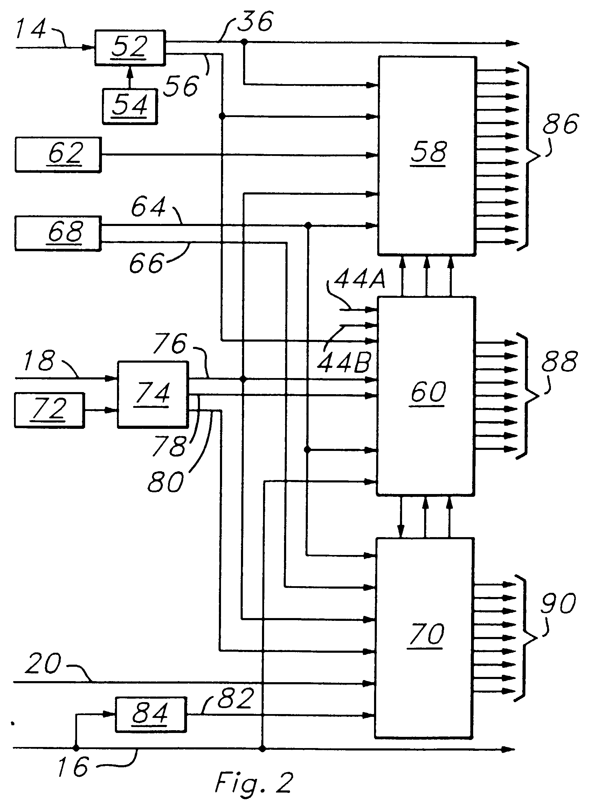

The internal functions of the system controller are shown in Figure 2. The control functions are broken into a separate block for each major area of control required, a memory controller 60, a spatial light modulator array controller 70, and a data formatter controller 58. Horizontal synchronization signal 14 is used in module 52 with an input signal from switch 54 to produce the sample clock signal on line 36. Also produced from the module 52 is the horizontal blanking signal 56 which is used to blank parts of the line as required for proper data display. This signal is provided to the data formatter controller 58 and video memory (VRAM) controller 60.

A clock generator 62 produces a clock to drive the write signals for the formatter, allowing it to operate at a different speed than the rest of the system, for optimal system efficiency. A second clock generator provides two clock signals, one 64, which is sent to the formatter controller, the memory controller, and the modulator controller to coordinate the read operations from the data formatter to the memory array. The other, 66, is sent to the modulator controller to coordinate the read operations from the memory array to the modulator.

The color wheel lock signal is input to system initializer unit 74, which coordinates the initial states of the system at initial startup, or any other loss of synchronization between the display and the color wheel, such as channel changes. An additional input signal, 72, power on reset, is generated by the controller at power up of the system. This module generates at least three signals. System reset signal, which is sent to all three subcontrollers, provides the coordination to reset the system when necessary. Additional signals, 78 and 80 are provided to the VRAM controller and the modulator controller respectively. Signal 78 is sent to the VRAM controller to initialize a first-input-first-output (FIFO) buffer, which will be described in more detail in another drawing. A modulator array blanking signal 80 is sent to the modulator array to blank out the array to prevent the display of incorrect data due to lack of system synchronization.

Additional inputs to the VRAM controller are lines 44A and 44B mentioned previously. These are used to direct the storage of the data to allow flexibility in selection of either front or rear projection, since the order the data is stored and accessed determines whether the data is displayed for a front or a rear projection screen. Line 44A provides for left-right, or east-west, flip of the data. Line 44B provides for bottom-top, or north-south, flip of the data.

The inputs to the spatial light modulator controller have mostly been discussed above. An additional signal 82, which is a display count produced by module 84, from vertical synchronization input signal 16, is input to the modulator controller. The power fail signal 20, is input to the modulator controller to regulate the power down operation of the modulator array.

In summary, the signals provided to the data formatter controller 58 are as follows: the sample clock 36; horizontal blanking signal 56; formatter write clock 62; system reset 76; and data formatter read clock 64. The signals provided to the VRAM controller 60 are east-west flip signal 44A; north-south flip signal 44B; horizontal blanking signal 56; system reset 76; FIFO initialization 78; data formatter read clock 64, and vertical synchronization 16. The inputs to the modulator controller are: data formatter read clock 64; memory read clock 66; blanking signal 80; power fail signal 20; and display count 82. The outputs from each subcontroller, output groups 86, 88, and 90, are discussed in detail in following drawings.

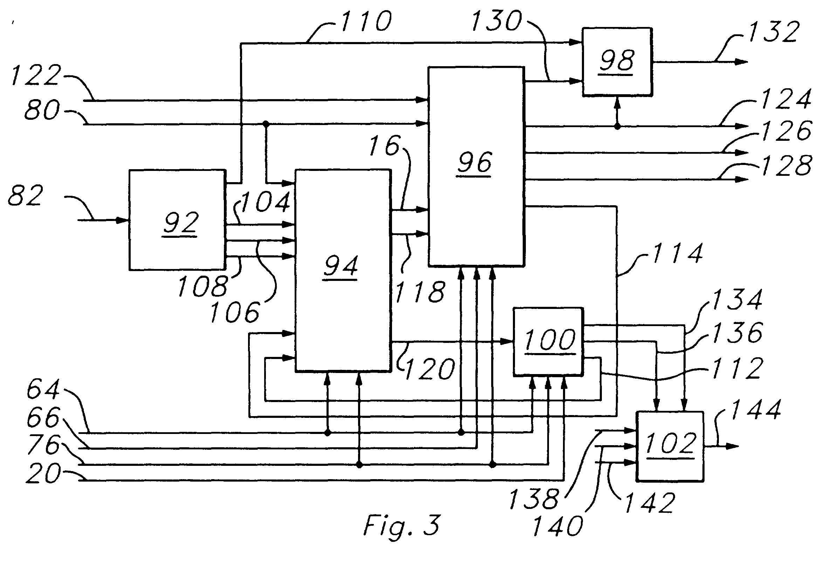

A more detailed diagram of the functions contained in the spatial light modulator controller is shown in Figure 3. The modulator controller consists of a sequence memory 92, in this example a 1K x 8 memory, a state machine 94, a write and clear block 96, an address controller 98, a reset block 100, and a analog multiplexer 102, to control the reset of the mirrors to their next state.

The sequence memory 92, has as its sole input the display count signal 82. The sequence memory generates a reset signal for the state machine 94, on line 104. Additionally, the sequence memory provides a write signal 106, and a clear signal 108 to the state machine. A signal 110 containing the bit #, and the color number currently being used is sent to the address controller 98 from the sequence memory 92. This memory allows the control of the sequence of events. It is flexible enough to allow for different sequences, thus it can be adjusted for any system.

The state machine 94 controls the state of the modulator controller. It has as its inputs the reset 104, write 106, and clear 108 signals mentioned previously. Additionally, it receives the modulator blanking signal 80, which notifies the state machine as to the desired blanking status of the modulator array. Two inputs are generated from the reset block 100, and the write and clear block 96. The reset block 100 provides the state machine with the status of the reset circuit on line 112. The write and clear block sends back a response indicating the status of the modulator blanking operation on line 114. All of these inputs are used in the state machine to determine which operations, i.e., what state the controller should be in. After this is decided by the state machine, it outputs an enable signal. If writing is to be done, write enable is sent to the write and clear block on line 116. If the modulator is to be cleared, clear enable is sent to the write and clear block 96 on line 118. If the device is to be reset, reset enable is sent to the reset block 100 on line 120.

The write and clear block 96 controls the operation of the writing or clearing of the modulator array. Additional inputs to this block are the modulator blanking signal 80 and a transfer stop signal 122. In order for modulator to have data to display, it must request the data be transferred to the output register of the video RAM by the video RAM controller. When the transfer of data is complete and the data can be loaded into the modulator array, a transfer stop signal 122 is sent to the write and clear block to indicate that the data is available. The write and clear block then enables writing the data to the array. When the data has been written and displayed, and new data is required, the write and clear block generates the transfer request on line 124. This line also goes to the address control block 98 to enable the transfer address required by the VRAM for the transfer operation. Another output of the write and clear block is the VRAM serial clock signal 126, which drives a serial clock in the VRAM. The desired data in the VRAM is transferred from the actual memory into a shift register. The data in the shift register is then read serially by the input circuitry of the modulator under control of the serial clock signal 126. The signals required to control the writing and blanking of the modulator array are provided on modulator control line 128. The final output data provided by the write and clear block is the number of the VRAM row which contains the desired block of data. This signal is sent on line 130 to the address controller 98.

The address controller takes its inputs, the bit number and color number on line 110, the vertical row on line 130, and the transfer request signal on line 124, and produces a transfer address on line 132. The transfer address determines to what address data is transferred from in the VRAM to the shift register which will ultimately be output to the modulator.

The final two functions provided by the modulator controller are due to the preferred embodiment of the present invention which uses an array of deformable mirrors. Each mirror in the array is addressed by its own separate electrode, which causes the mirror to flip in one of two directions if the electrode is loaded with data. The light from a source is then directed upon the array, and the light reflected from the mirrors flipped in one direction is used in the display. The reset signals previously discussed are necessary to allow the mirrors to accept their new data. In order to accomplish this, the reset block 100 and the analog multiplexer 102 are used. The reset block 100 has as its inputs the reset enable signal, 120, from the state machine 94, clock signal 64, system reset signal 76, and the power fail signal 20. In return, this block generates the reset done signal 112, which is provided to the state machine. It also provides a reset voltage enable and a bias voltage enable to the analog multiplexer on lines 134 and 136, respectively. The analog multiplexer takes those two inputs along with a ground voltage signal 138, a reset voltage 140, and a bias voltage 142 and produces an analog voltage level 144 used to reset the mirrors to their new data states.

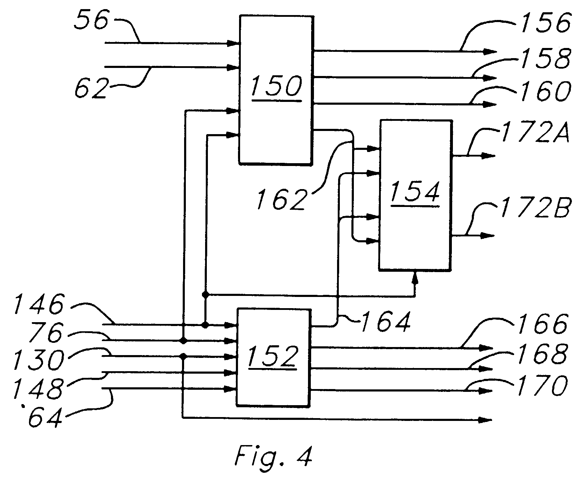

A more detailed view of the data formatter controller 58 from Figure 2, is shown in Figure 4. The formatter functions are divided into an input controller 150, an output controller 152, and an address multiplexer 154. The input controller 150 has as its inputs the horizontal blanking signal 56, which determines what portion of the line is being blanked, and the formatter write clock 62, which controls when data is being written to the formatter. Additional inputs are the line number least-significant-bit 146, which determines whether it is an odd or even line currently being used. The input controller generates as its outputs FIFO control signals 156, which are used to write to a FIFO buffer in front of the data formatter, a write enable mask 158, which is used to determine which block of memory in the formatter is being written to. The FIFO mentioned above is not necessary for operation of the system, but it is convenient to store the data in the FIFO to allow for better coordination in the system. Details of the formatter architecture are contained in the related application, EP-A-530 759. The write enable mask is used in conjunction with the write enable clock output from the input controller on the line 160. The final output of the input controller is the write address 162 for the formatter which is sent to the address multiplexer 154.

The output controller 152 determines what addresses of the data formatter memory blocks are accessed to provide data to the VRAM. The inputs to this module are the line number least-significant-bit 146, which determines whether the line number is odd or even, the system reset signal 76, the bit and color number 130 from the memory controller, a read enable signal from the VRAM controller, and the clock signal to coordinate the reads from the formatter to the VRAM, 64. The output control has as its outputs a read address 164, which determines from which address the formatter is read, a bit select signal which determines which bit of the output word is being sent to the VRAM in what order, and output clocks 170, which time the output operations.

The address multiplexer 154 uses signals 162, the write address from the input controller 150, and the read address 164 from the output controller 152, in two different lines. The formatter in this embodiment is assumed to actually have two sets of formatter circuitry within it. This allows for data to be read into one set to be formatted, while the other provides formatted data to be read out of it to the VRAMs. The address multiplexer 154 then has as its outputs two addresses. Line 172A contains either the read or write address for the first set of formatter circuitry, and line 172B contains either the read or write address for the second set of formatter circuitry. These outputs are then sent to the formatter.

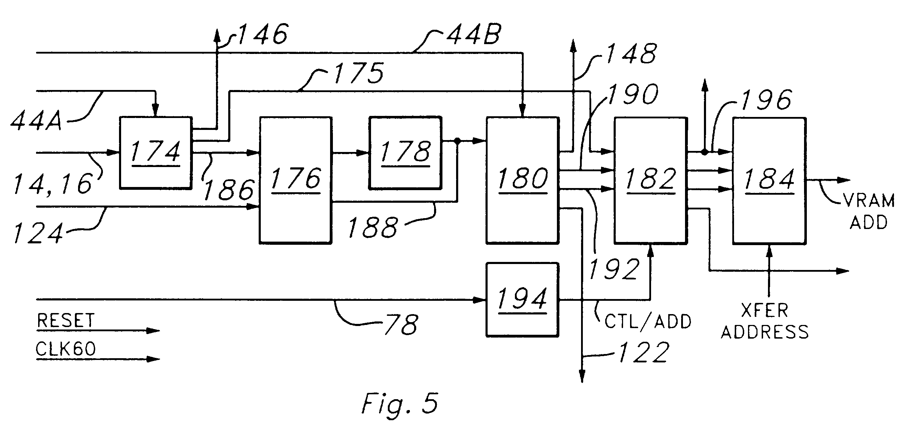

The detailed functions provided by the VRAM controller are shown in Figure 5. The VRAM controller functions are broken down into a line counter 174, a refresh, write, and transfer requester 176, a state machine 178, a refresh, write, and transfer controller 180, a multiplexer/demultiplexer 182, and a memory allocation block 184. The line counter 174 tracks the line number of the current active lines, and the line number is used by the refresh, write, and transfer controller to generate the write address. The line counter sends to the requester 176 signals on line 186 specifying either a refresh, or a write to the VRAM. Which is sent is determined by one of many ways. The refresh must be completed at least three times every frame for this VRAM, but refreshing depends on the actual implementation of the memory. Writes must be done every line of the active portion of the video frame. These signals are sent to the requester block 176 which determines what request must be processed. An additional input to the line counter is the north-south flip input 44A. This is necessary, since a north-south flip affects which line number is read at which time. If the data is stored line 1-240 (for one half of a 480 line array), and a north-south flip is desired, the data must be read out as 240-1.

The requester block 176 sends the appropriate request code to the state machine. Its inputs are the request line from the line counter 186 and transfer request from the modulator controller on line 124. The requester sends its request to the state machine 178. The state machine then sends back a signal 188 that designates which state the VRAM controller is currently in. The requester uses this data in determining what request should be processed next. The transfer request 124 must be processed after the output shift register is emptied. In this example, the output shift register is decided to be 256 bits long. Sixteen bits of each binary weight of data is stored for each line in each block for every binary weight. Therefore, the data for 16 lines can be shifted into the shift register. So a transfer request must be made after every sixteenth line is read.

The state machine 178 also sends the signal 188 to the refresh, write, and transfer controller 180. The controller uses the input from the state machine to time the various operations so the data is available for read and write at the appropriate time. An additional input to this block is the input signal 44B, the east-west flip signal. This signal affects what order the data is stored or read from the VRAM for each line, as the order determines whether or not the data is flipped. The controller 180 has as its outputs several control signals on line 190 that are used to time the various operations, addresses on line 192, which determine where the data is to be sent, the transfer stop signal 122, which tells the modulator controller that data is available, and the read enable signal 148 which signals the formatter controller to begin outputting data.

The control signals 190 and the addresses 192 are sent to the multiplexer/demultiplexer block 182. An additional block providing input to block 182 is the FIFO initialization block 194 which has as its only input the FIFO initialization signal 78. The FIFO initialization block provides a control/address input that loads the data into the memory allocation FIFO for proper operation upon start-up. This FIFO is not to be confused with the FIFO used in the formatter. The multiplexer/demultiplexer block then selects the address for the mapping table on line 196, based upon the current operational state. The use of the mapping table is discussed in further detail in the related application EP-A-0 530 760. Additional outputs are then sent to the dynamic memory allocation block 184.

The VRAM address 198, the mapping table control 200, and the VRAM control 202 are all output by the multiplexer/demultiplexer block. The VRAM control signal is sent straight to the VRAM. A final input 204 to the memory allocation block 184 is the address of the data that is being transferred into the VRAM shift register, which comes from the modulator controller. All of these inputs are used to determine the final VRAM address for writing data from the formatter module, refreshing the VRAM and reading data from the VRAM. The data for all of the rows and columns of the array for an entire frame is stored in the VRAM before the data is written to the modulator. While all of that frame's data is being read out of the VRAM, another frame is being stored, and the entire signal generation process repeats.

Thus, although there has been described to this point a particular embodiment for a method and structure for controlling a spatial light modulator television, it is not intended that such specific references be considered as limitations upon the scope of this invention except in-so-far as set forth in the following claims.

## Claims

1. A method for controlling a spatial light modulator display system comprising:
dividing the control functions into a data formatter controller (58), a memory controller (60), and a modulator controller (70); generating signals between said controllers to coordinate the reading, writing, and transferring of data between a data formatter (24), a memory, and a modulator (50), such that said transfers are done to load the entire modulator with the appropriate data; said generating step being characterized by:
providing signals to said formatter (24), said memory and said modulator (50) to include a reset voltage (144) that causes each element to assume a state consistent with its data, such that when said modulator (50) is illuminated a visual image is formed from light reflected off of said modulator (50).

2. The method of claim 1 wherein said dividing step further comprises dividing said data formatter controller (58) into an input controller (150), an output controller (152), and an address multiplexer (154).

3. The method of claim 1 wherein said dividing step further comprises dividing said memory controller (60) into a line counter (174), a requester (176), a state machine (178), an operations controller (180), a multiplexer/demultiplexer (182), a first-in-first-out buffer initializer (194), and a dynamic memory allocator (184).

4. The method of claim 1 wherein said dividing step further comprises dividing said modulator controller (70) into a sequence memory (92), a state machine (94), a write and clear function (96), a reset controller (100), an address controller (98), and an analog multiplexer (102).

5. A system controller (10) for a spatial light modulator display system comprising a modulator controller (70); a memory controller (60); a formatter controller (58); and signals between said modulator controller and said memory controller, between said modulator controller and said formatter controller, and between said memory controller and said formatter controller, to coordinate the reading, writing and transferring of data between said controllers, such that said transfers are done to load the entire modulator (50) with the appropriate data; said system controller characterized in that:
said modulator controller (70) generates a reset voltage (144) for said modulator (50) after said modulator (50) has been loaded with the appropriate data, said voltage causing all elements on said modulator (50) to assume a new state consistent with their new data, thereby forming an image.

6. The controller of claim 5 wherein said formatter controller (58) further comprises an input controller (150), an output controller (152), and an address multiplexer (154).

7. The method of claim 5 wherein said memory controller (60) further comprises a line counter (174), a requester (176), a state machine (178), an operations controller (180), a multiplexer/demultiplexer (182), a first-in-first-out buffer initializer (194), and a dynamic memory allocator (184).

8. The method of claim 5 wherein said modulator controller (70) further comprises a sequence memory (92), a state machine (94), a write and clear function (96), a reset controller (100), an address controller (98), and an analog multiplexer (102).

## Patentansprüche

1. Verfahren zum Steuern eines Anzeigesystems mit räumlichen Lichtmodulatoren, mit den Schritten:
Unterteilen der Steuerfunktionen in einen Datenformatierer-Controller (58), einen Speicher-Controller (60) und einen Modulator-Controller (70); Erzeugen von Signalen zwischen den Controllern, um das Lesen, Schreiben und Übertragen von Daten zwischen einem Datenformatierer (24), einem Speicher und einem Modulator (50) in der Weise zu koordinieren, daß die Übertragungen erfolgen, um den gesamten Modulator mit den geeigneten Daten zu laden; wobei der Erzeugungsschritt gekennzeichnet ist durch:
Bereitstellen von Signalen für den Formatierer (24), den Speicher und den Modulator (50), die eine Rücksetzspannung (144) enthalten, die jedes Element dazu veranlaßt, einen mit seinen Daten konsistenten Zustand anzunehmen, so daß dann, wenn der Modulator (50) beleuchtet wird, aus dem vom Modulator (50) reflektierten Licht ein sichtbares Bild erzeugt wird.

2. Verfahren nach Anspruch 1, bei dem der Unterteilungsschritt ferner das Unterteilen des Datenformatierer-Controllers (58) in einen Eingangscontroller (150), einen Ausgangscontroller (152) und einen Adressenmultiplexer (154) enthält.

3. Verfahren nach Anspruch 1, bei dem der Unterteilungsschritt ferner das Unterteilen des Speicher-Controllers (60) in einen Zeilenzähler (174), einen Requester (176), eine Zustandsmaschine (178), einen Operationen-Controller (180), einen Multiplexer/Demultiplexer (182), einen FIFO-Puffer-Initialisierer (194) und einen dynamischen Speicherzuweiser (184) enthält.

4. Verfahren nach Anspruch 1, bei dem der Unterteilungsschritt ferner das Unterteilen des Modulator-Controllers (70) in einen Sequenzspeicher (92), eine Zustandsmaschine (94), eine Schreib- und Löschfunktion (96), einen Rücksetz-Controller (100), einen Adressen-Controller (98) und einen Analog-Multiplexer (102) enthält.

5. System-Controller (10) für ein Anzeigesystem mit räumlichen Lichtmodulatoren, mit einem Modulator-Controller (70); einem Speicher-Controller (60); einem Formatierer-Controller (58); und Signalen zwischen dem Modulator-Controller und dem Speicher-Controller, zwischen dem Modulator-Controller und dem Formatierer-Controller und zwischen dem Speicher-Controller und dem Formatierer-Controller, um das Lesen, Schreiben und Übertragen von Daten zwischen den Controllern in der Weise zu koordinieren, daß die Übertragungen erfolgen, um den gesamten Modulator (50) mit den geeigneten Daten zu laden; wobei der System-Controller dadurch gekennzeichnet ist, daß:
der Modulator-Controller (70) eine Rücksetzspannung (144) für den Modulator (50) erzeugt, nachdem der Modulator (50) mit den geeigneten Daten geladen worden ist, wobei die Spannung sämtliche Elemente im Modulator (50) dazu veranlaßt, einen neuen Zustand anzunehmen, der mit ihren neuen Daten konsistent ist, wodurch ein Bild erzeugt wird.

6. Controller nach Anspruch 5, bei dem der Formatierer-Controller (58) einen Eingangs-Controller (150), einen Ausgangs-Controller (152) und einen Adressen-Multiplexer (154) enthält.

7. Verfahren nach Anspruch 5, bei dem der Speicher-Controller (60) ferner einen Zeilenzähler (174), einen Requester (176), eine Zustandsmaschine (178), einen Operationen-Controller (180), einen Multiplexer/Demultiplexer (182), einen FIFO-Puffer-Initialisierer (194) und einen dynamischen Speicherzuweiser (184) enthält.

8. Verfahren nach Anspruch 5, bei dem der Modulator-Controller (70) ferner einen Sequenzspeicher (92), eine Zustandsmaschine (94), eine Schreib- und Löschfunktion (96), einen Rücksetz-Controller (100), einen Adressen-Controller (98) und einen Analog-Multiplexer (102) enthält.

## Revendications

1. Procédé pour commander un système d'affichage d'un modulateur spatial de lumière consistant à :
subdiviser les fonctions de commande entre un dispositif de commande (58) d'un dispositif de formatage de données, un dispositif de commande de mémoire (60) et un dispositif de commande de modulateur (70); produire des signaux entre lesdits dispositifs de commande de manière à coordonner la lecture, l'écriture et le transfert de données entre un dispositif de formatage de données (24), une mémoire et un modulateur (50), de telle sorte que lesdits transfert sont effectués pour charger l'ensemble du modulateur avec des données appropriées, ladite étape de production étant caractérisée par :
l'envoi de signaux au dispositif de formatage (24), à ladite mémoire et audit modulateur (50) pour inclure une tension de remise à l'état initial (144), qui amène chaque élément à prendre un état compatible avec ses données, de sorte que, lorsque ledit modulateur (50) est éclairé, une image visuelle est formée par la lumière réfléchie par ledit modulateur (50).

2. Procédé selon la revendication 1, selon lequel ladite étape de subdivision comprend en outre la subdivision dudit dispositif de commande (58) du dispositif de formatage de données en un dispositif de commande d'entrée (150), un dispositif de commande de sortie (152) et un multiplexeur d'adresses (154).

3. Procédé selon la revendication 1, selon lequel ladite étape de subdivision comprend en outre la subdivision dudit dispositif de commande de mémoire (60) en un compteur de lignes (174), une unité de demande (176), un automate fini (178), un dispositif de commande d'opérations (114), un multiplexeur/démultiplexeur (182), un dispositif (194) d'initialisation de tampons premier entré - premier sorti et un dispositif d'affectation dynamique de mémoire (184).

4. Procédé selon la revendication 1, selon lequel ladite étape de subdivision comprend en outre la subdivision dudit dispositif de commande (70) du modulateur en une mémoire de séquences (92), un automate fini (94), une fonction d'écriture et d'effacement (96), un dispositif de commande de remise à l'état initial (100), un dispositif de commande d'adresses (98) et un multiplexeur analogique (102).

5. Dispositif (10) de commande pour un système d'affichage d'un modulateur spatial de lumière comprenant un dispositif (70) de commande de modulateur; un dispositif de commande de mémoire (60); un dispositif de commande (58) de dispositif de formatage; et des signaux entre ledit dispositif de commande du modulateur et ledit dispositif de commande de mémoire, entre ledit dispositif de commande du modulateur et ledit dispositif de commande du dispositif de formatage et entre ledit dispositif de commande de mémoire et ledit dispositif de commande du dispositif de formatage pour coordonner la lecture, l'écriture et le transfert de données entre lesdits dispositifs de commande, de sorte que lesdits transferts sont exécutés pour charger l'ensemble du modulateur (50) avec les données appropriées; ledit dispositif de commande étant caractérisé en ce que :
ledit dispositif de commande (70) du modulateur produit une tension de remise à l'état initial (144) pour ledit modulateur (50) une fois que ledit modulateur (50) a été chargé par les données appropriées, ladite tension amenant tous les éléments situés dans ledit modulateur (50) à prendre un nouvel état compatible avec leurs nouvelles données, en formant ainsi une image.

6. Dispositif de commande selon la revendication 5, dans lequel ledit dispositif de commande (58) du dispositif de formatage comprend en outre un dispositif de commande d'entrée (50), un dispositif de commande de sortie (152) et un multiplexeur d'adresses (154).

7. Procédé selon la revendication 5, selon lequel ledit dispositif de commande de mémoire (60) comprend en outre un compteur de lignes (174), une unité de demande (176), un automate fini (178), un dispositif de commande d'opérations (180), un multiplexeur/démultiplexeur (182), un dispositif (194) d'initialisation de tampons premier entré - premier sorti et un dispositif d'affectation dynamique de mémoire (184).

8. Procédé selon la revendication 5, selon lequel ledit dispositif de commande (70) du modulateur comprend une mémoire de séquences (92), un automate fini (94), une fonction d'écriture et d'effacement (96), un dispositif de commande de remise à l'état initial (100), un dispositif de commande d'adresses (98) et un multiplexeur analogique (102).
